# EUROPÄISCHE PATENTSCHRIFT

(11) **EP 2 071 488 B1**
(45) Veröffentlichungstag und Bekanntmachung des Hinweises auf die Patenterteilung: **03.08.2011**
(21) Anmeldenummer: 08105934.7
(22) Anmeldetag: 03.12.2008
(51) Int. Cl.: G06K 7/00, G06K 13/08, G07C 5/08

(54) **Karteneinzugsvorrichtung**
Card entering device
Dispositif d'introduction de carte

(30) Priorität: 12.12.2007 DE 102007059788
(43) Veröffentlichungstag der Anmeldung: 17.06.2009
(73) Patentinhaber: Continental Automotive GmbH, 30165 Hannover (DE)
(72) Erfinder: Wahler, Torsten, 78073 Bad Dürrheim (DE)

(56) Entgegenhaltungen:
- WO-A-03/073361
- WO-A-2004/100076
- US-A- 4 724 310

## Beschreibung

Die Erfindung bezieht sich auf eine Karteneinzugsvorrichtung gemäß dem Oberbegriff des Anspruchs 1.

Derartige digitale Fahrtschreiber verwenden als Karte eine Chipkarte, wobei bei in den Fahrtschreiber eingeführter Chipkarte ein Austausch von fahrer- und fahrzeugspezifischen Daten zwischen der Chipkarte und einer Lese- und Speichereinheit erfolgt.

Während der Aufzeichnung von Daten bei der Benutzung des Fahrzeugs darf die Chipkarte unter keinen Umständen von außen entnommen oder aus der Kartenaufnahmevorrichtung ausgeworfen werden können.

Dabei muss die Chipkarte vollständig eingeführt und verriegelt werden und die Verriegelung muss absolut sicher gegen Manipulation sein.

Bei einer derartigen Karteneinzugsvorrichtung ist es bekannt, das Antriebsteil für die Einzugsbewegung und die Ausschubbewegung der Transportvorrichtung mit umschaltbarer Drehrichtung anzutreiben. Dies erfordert einen aufwendigen und damit teuren reversierbaren Motor.

Die Sensoreinrichtung zur Überwachung und steuerung des Kartentransports weist eine Vielzahl von Sensoren auf.

Aus WO 03/073361 A ist eine Karteneinzugsvorrichtung zum Einzug einer Karte mit einer Transportvorrichtung bekannt, die von einem durch einen Antrieb antreibbaren Antriebsteil auf einem Transportweg zwischen einer Ausfahrposition und einer Einzugsposition translatorisch bewegbar antreibbar ist, wobei das Erreichen der Ausfahrposition und der Einzugsposition des Antriebsteils durch eine Sensoreinrichtung erfassbar ist. Eine ähnliche Karteneinzugsvorrichtung offenbart auch WO 2004/100076 A. '

Aufgabe der Erfindung ist es daher, eine Karteneinzugsvorrichtung der eingangs genannten Art zu schaffen, die einen einfachen und kostengünstigen Aufbau bei genauer Ansteuerung des Antriebs aufweist.

Diese Aufgabe wird erfindungsgemäß gelöst mit einer Karteneinzugsvorrichtung nach Anspruch 1.

Diese Ausbildung ermöglicht es bei einfachem Aufbau einen Antrieb zu verwenden, der sowohl für die Einzugsbewegung als auch für die Ausschubbewegung nur einen einzigen Drehsinn benötigt und somit die Verwendung eines kostengünstigen, nicht reversiblen Antriebs erlaubt.

Zur genauen Ansteuerung und zu einem rechtzeitigen Stoppen des Antriebs in der jeweiligen Endlage wird die Ausfahrposition und/oder die Einzugsposition des Antriebsteils erfasst, die zwangsweise der Ausfahrposition und der Einzugsposition der Transportvorrichtung entspricht und damit exakt die voll ausgefahrene und die voll eingefahrene Position der Transportvorrichtung wiedergibt.

Vorzugsweise kann das Antriebsteil zwei um 180° versetzte Auslöseelemente aufweisen, durch die in der Ausfahrposition und in der Einzugsposition des Antriebsteils ein entsprechendes signal der Sensoreinrichtung auslösbar und der Steuereinheit zuleitbar ist.

Um auch sicherzustellen, dass die Karte vollständig in die Transportvorrichtung eingeführt und mit der Transportvorrichtung in die Einzugsposition transportiert wurde, kann von dem Antriebsteil ein Verriegelungselement zwischen einer Verriegelungsposition und einer Entriegelungsposition bewegbar antreibbar sein, durch das in der Verriegelungsposition ein Verriegelungssignal eines Verriegelungssensors auslösbar und der Steuereinheit zuleitbar ist, wobei durch das Verriegelungselement in der Verriegelungsposition die Einführöffnung der in der Einzugsposition befindlichen Transportvorrichtung ganz oder teilweise verschließbar und in der Entriegelungsposition die Einführöffnung der in der Ausfahrposition befindlichen Transportvorrichtung freigebbar ist.

Dazu kann in einfacher Ausbildung das Verriegelungselement eine Auslösefahne aufweisen, durch die das Verriegelungssignal des Verriegelungssensors auslösbar ist.

Das Verriegelungselement kann dabei bauraumsparend ein um eine Schwenkachse schwenkbares Verriegelungselement sein.

Die Sensoreinrichtung und/oder der Verriegelungssensor können eine berührungslos auslösbare Sensoreinrichtung und/oder ein berührungslos auslösbarer Verriegelungssensor sein.

Eine exakte Positionserfassung einer Position wird auf einfache Weise dadurch erreicht, dass das Antriebsteil eine kreisscheibenartige Blende mit einer in einem bestimmten radialen Abstand zur Drehachse der Blende durchgehend ausgebildeten Positionsöffnung ist, mit einem mit demselben radialen Abstand zur Drehachse angeordneten, zur Blende gerichteten Lichtsender auf der einen Seite der Blende und einem dem Lichtsender auf der anderen Seite der Blende gegenüberliegenden Lichtempfänger, wobei bei Überdeckung des Lichtsenders durch die Positionsöffnung von dem Lichtempfänger das Signal auslösbar und der Steuereinheit zuleitbar ist, da nur bei einem Fluchten von der Positionsöffnung mit dem Lichtsender und Lichtempfänger das Signal ausgelöst werden kann.

Um zwei Positionen exakt erfassen zu können, kann die kreisscheibenartige Blende eine zweite durchgehend ausgebildete Positionsöffnung in einem weiteren bestimmten radialen Abstand zur Drehachse der Blende aufweisen, mit einem mit demselben weiteren radialen Abstand zur Drehachse angeordneten, zur Blende gerichteten zweiten Lichtsender auf der einen Seite der Blende und einem dem zweiten Lichtsender auf der anderen Seite der Blende gegenüberliegenden zweiten Lichtempfänger, wobei bei Überdeckung des zweiten Lichtsenders durch die zweite Positionsöffnung von dem zweiten Lichtempfänger ein weiteres Signal auslösbar und der Steuereinheit zuleitbar ist.

Ein besonders einfacher Aufbau wird dadurch erreicht, dass die zweite Positionsöffnung um einen Winkel, insbesondere um 180° versetzt in demselben radialen Abstand zur Drehachse der Blende wie die erste Positionsöffnung angeordnet ist und mit einem einzigen mit demselben radialen Abstand zur Drehachse angeordneten, zur Blende gerichteten Lichtsender auf der einen Seite der Blende und einem einzigen dem Lichtsender auf der anderen Seite der Blende gegenüberliegenden Lichtempfänger, wobei bei Überdeckung des Lichtsenders durch eine der beiden Positionsöffnungen von dem Lichtempfänger ein Signal auslösbar und der Steuereinheit zuleitbar ist.

Dadurch können mit einem einzigen Lichtsender und Lichtempfänger zwei Positionen erfasst werden. Zur Definition welche davon die Ausfahrposition und welche die Einzugsposition ist, kann das Verriegelungssignal des Verriegelungssensors benutzt werden.

Vorzugsweise sind auch ein zweiter Lichtsender und ein zweiter Lichtempfänger in einem Abstand voneinander angeordnet und die Auslösefahne in der Verriegelungsposition des Verriegelungselements eine Lichtstrahlung vom Lichtsender zum Lichtempfänger unterbrechend in den Abstand hineinbewegt.

Ist der erste Lichtsender und/oder der zweite Lichtsender eine erste und/oder eine zweite Lichtauskoppelstelle eines ersten und/oder eines zweiten Lichtleiters, der in einem Abstand zur ersten und/oder zweiten Lichtauskoppelstelle eine erste und/oder zweite Lichteinkoppelstelle aufweist, an der durch eine Lichtquelle Licht in den ersten und/oder zweiten Lichtleiter einkoppelbar ist, so kann die Lichtquelle an einer nicht bauraumkritischen Stelle angeordnet werden.

Ist zwischen der ersten und/oder der zweiten Lichtauskoppelstelle und dem ersten und/oder zweiten Lichtempfänger ein feststehender erster und/oder zweiter Lichtleitkanal angeordnet, so wird in dem Lichtleitkanal das ausgekoppelte Licht zum Lichtempfänger geleitet und eine Lichtstreuung vermieden, die sonst keine exakte Definition der Ausfahr- bzw. Einzugsposition zulassen würde.

Ebenfalls zur Vermeidung von Streulicht und einer dadurch hervorgerufenen Fehlsteuerung an den Lichtempfängern dient es, wenn die erste/oder zweite Lichtquelle von einem feststehenden ersten und/oder zweiten Lichtschacht umschlossen ist, der zur ersten und/oder zweiten Lichteinkoppelstelle des ersten und/oder zweiten Lichtleiters führt.

Weist ein Lichtleiterbauteil mehrere Lichtleiter auf, die von einem Lichtverteiler ausgehen, von dem an der Lichteinkoppelstelle eingekoppeltes Licht in die mehreren Lichtleiter geleitet und Lichtauskoppelstellen der Lichtleiter zuleitbar ist, so ist nur eine einzige Lichtquelle zur Lichtversorgung mehrerer Lichtauskoppelstellen erforderlich.

Vorzugsweise ist die erste und/oder zweite Lichtquelle eine Leuchtdiode und der erste und/oder zweite Lichtempfänger ein Phototransistor.

Weist das Antriebsteil ein Koppelelement auf, das in einem Abstand zur Drehachse angeordnet ist und entlang einer sich im Wesentlichen quer zur Erstreckung des Bewegungswegs der Transportvorrichtung erstreckenden Führungsbahn an der Transportvorrichtung bewegbar geführt ist, wobei sich das Koppelelement in der Ausfahrposition und in der Einzugsposition in einer Mittenposition zwischen den beiden Enden der Führungsbahn befindet, so führt dies zu einer Antriebskinematik mit wenigen und defektunanfälligen Bauelemente, die nur einen geringen Bauraum insbesondere eine geringe Bauhöhe benötigt.

Die Führungsbahn kann sich dabei gerade erstrecken.

In einer einfachen Ausbildung kann das Koppelelement ein Kulissenstein und die Führungsbahn eine Kulissenbahn sein, in die das insbesondere als Kurbelzapfen runden Querschnitts ausgebildete Koppelelement bewegbar eingreift.

Ist das Antriebsteil ein Antriebszahnrad, so kann in einfacher Weise ein Drehantrieb dadurch erfolgen, dass in das Antriebszahnrad eine Zylinderschnecke eingreift, die von einem Drehantrieb, insbesondere von einem Elektromotor unidirektional drehbar antreibbar ist.

Dies reduziert auch wesentlich eine Geräuschbildung während des Antriebsvorgangs.

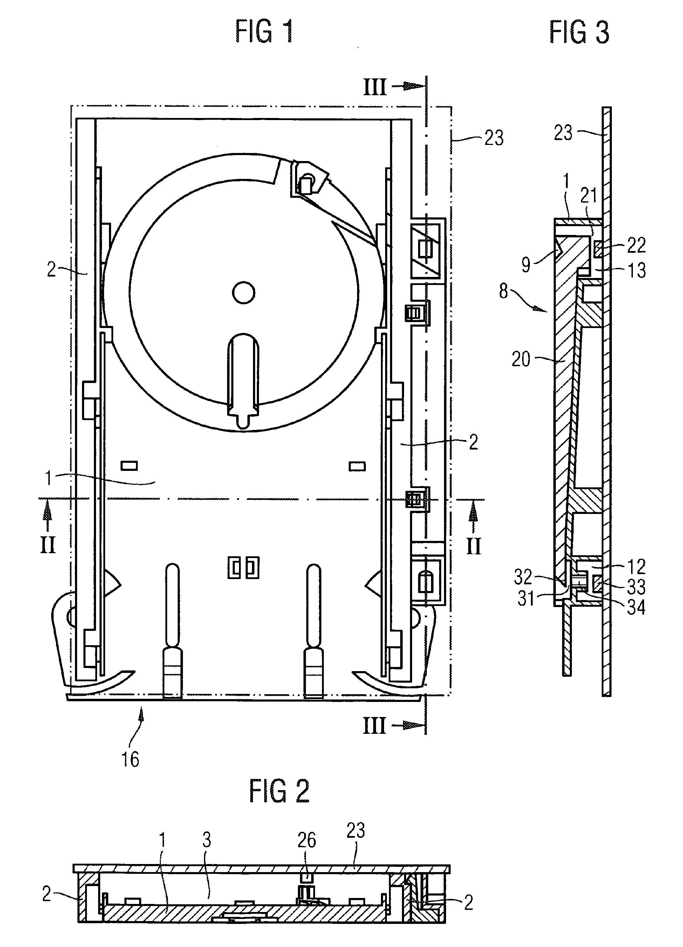

Ein Ausführungsbeispiel der Erfindung ist in der Zeichnung dargestellt und wird im Folgenden näher beschrieben. Es zeigen
- Figur 1: eine Draufsicht auf eine Karteneinzugsvorrichtung ohne Transportvorrichtung,
- Figur 2: einen Schnitt entlang der Linie II - II in Figur 1,
- Figur 3: einen Schnitt entlang der Linie III - III in Figur 1,
- Figur 4: eine Draufsicht auf die Karteneinzugsvorrichtung nach Figur 1 mit Transportvorrichtung in Ausfahrposition,
- Figur 5: einen Schnitt entlang der Linie V - V in Figur 4,
- Figur 6: einen Schnitt entlang der Linie VI - VI in Figur 4,
- Figur 7: eine Draufsicht auf die Karteneinzugsvorrichtung nach Figur 1 mit Transportvorrichtung in Einzugs- position,
- Figur 8: einen Schnitt entlang der Linie VIII - VIII in Figur 7,
- Figur 9: einen Schnitt entlang der Linie IX - IX in Figur 7,

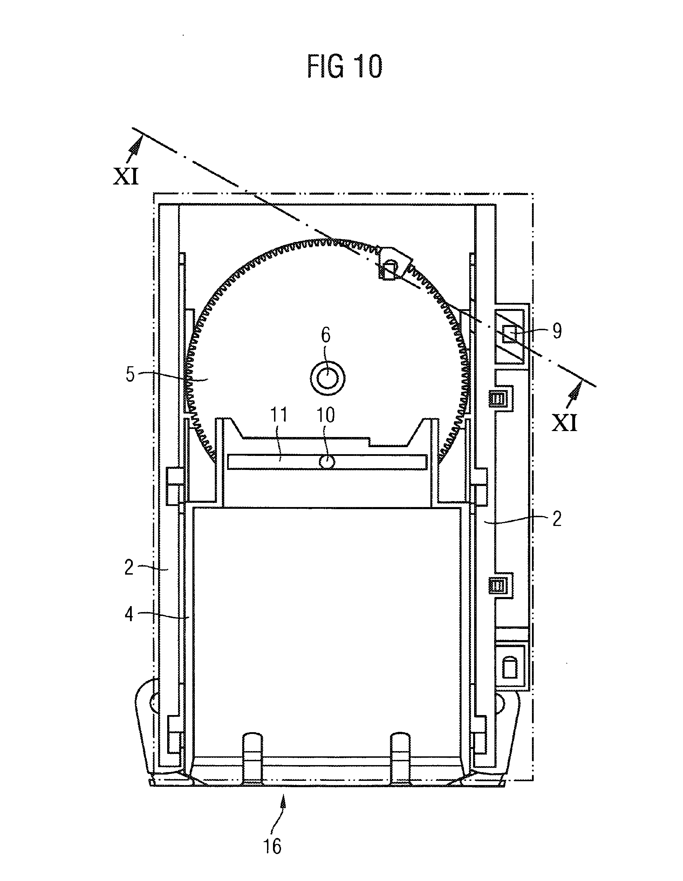

- Figur 10: eine Draufsicht auf die Karteneinzugsvorrichtung Figur 1 mit Transportvorrichtung in Ausfahrposi- tion,

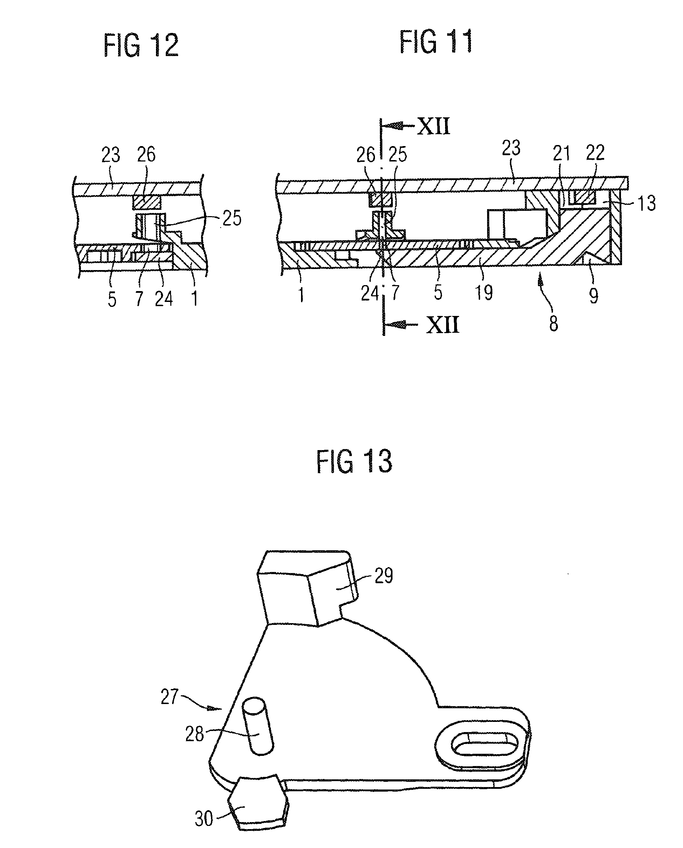

- Figur 11: einen Teilbereich eines Schnitts entlang der Linie XI - XI in Figur 10,
- Figur 12: einen Teilbereich eines Schnitts entlang der Linie XII - XII in Figur 11,
- Figur 13: eine perspektivische Ansicht eines Verriegelungs- elements der Karteneinzugsvorrichtung nach Figur 1,

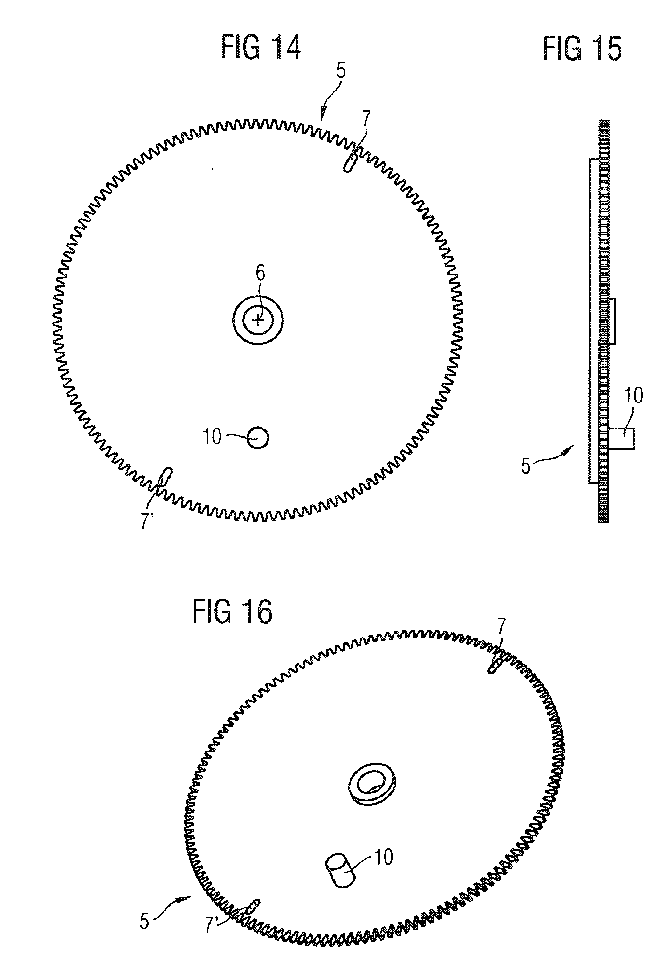

- Figur 14: eine Draufsicht eines Antriebszahnrads der Karten- einzugsvorrichtung nach Figur 1,
- Figur 15: eine Seitenansicht des Antriebszahnrads nach Figur 14,
- Figur 16: eine perspektivische Ansicht des Antriebszahnrads nach Figur 14,

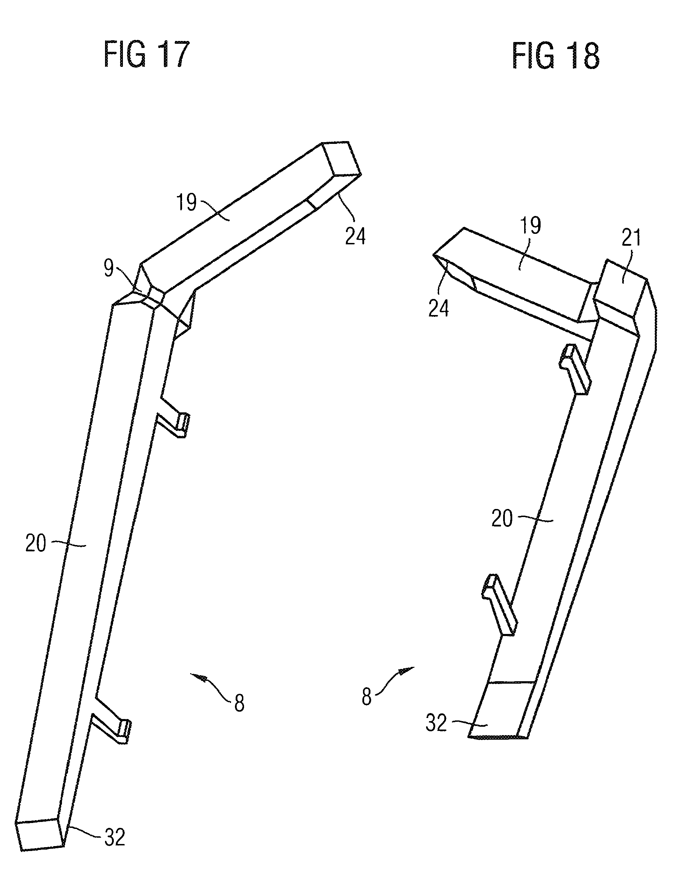

- Figur 17: ein Lichtleiterbauteil der Karteneinzugsvorrich- tung nach Figur 1 in perspektivischer Obenansicht,
- Figur 18: das Lichtleiterbauteil nach Figur 17 in perspek- tivischer Untenansicht,

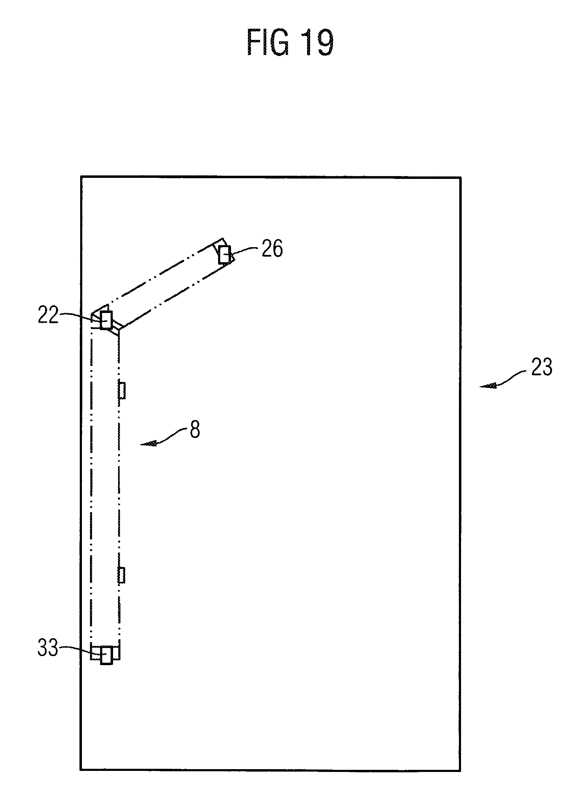

- Figur 19: eine Draufsicht einer Leiterplatte der Kartenein- zugsvorrichtung nach Figur 1 und

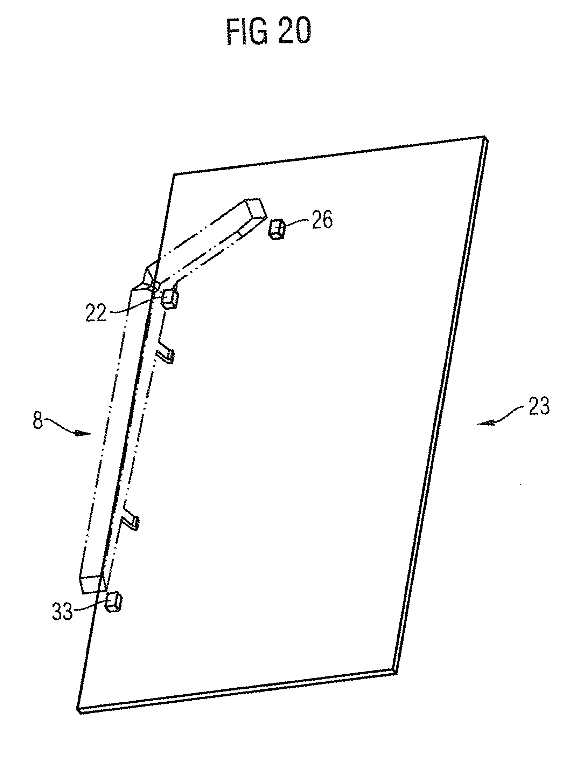

- Figur 20: eine perspektivische Ansicht der Leiterplatte nach Figur 19.

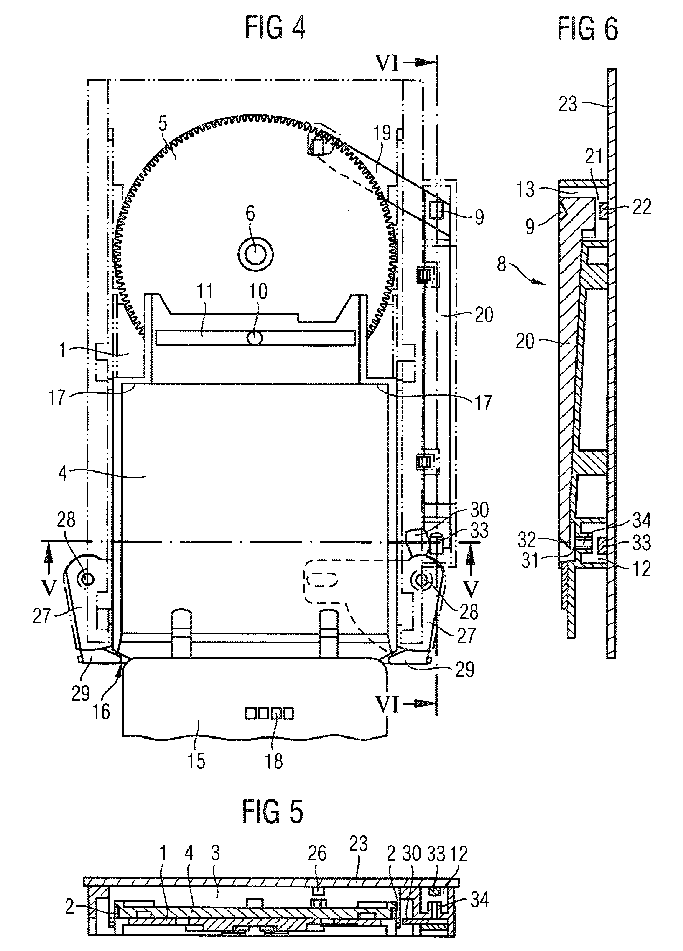

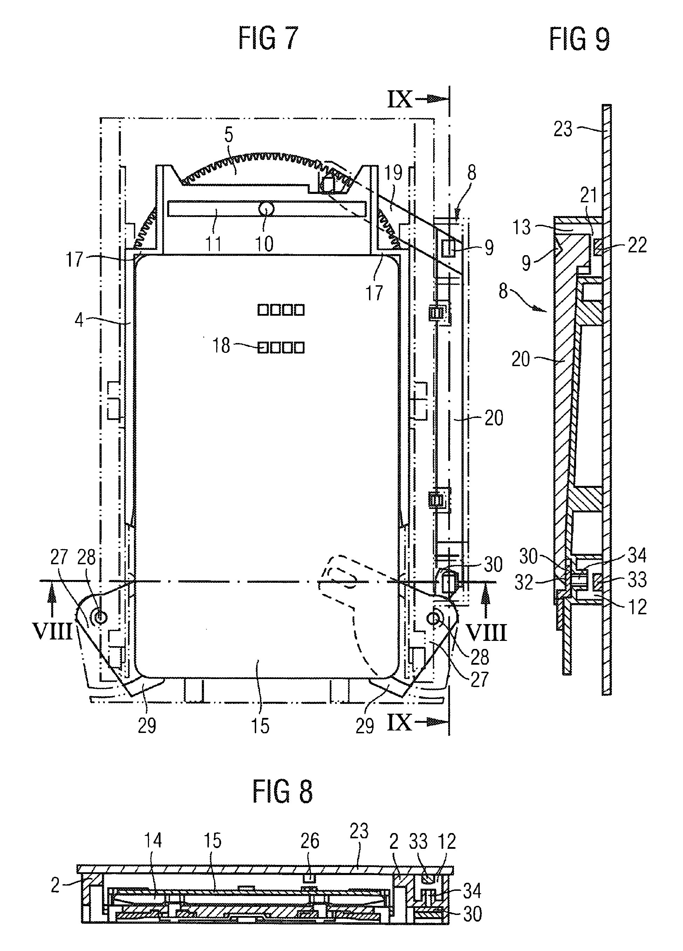

Die in den Figuren dargestellte Karteneinzugsvorrichtung für einen Fahrtschreiber eines Kraftfahrzeugs weist eine Trägerplatte 1 mit zwei in einem Abstand darauf angeordneten Seitenführungen 2 und einer auf den Seitenführungen 2 in einem Abstand parallel zur Trägerplatte 1 aufliegenden Leiterplatte 23 auf, die zwischen sich einen Schacht 3 bilden, in dem eine Transportvorrichtung 4 zwischen einer Ausfahrposition (Figuren 4 bis 6) und eine Einzugsposition (Figuren 7 bis 9) translatorisch geführt bewegbar ist.

Im hinteren Bereich ist auf der Trägerplatte 1 ein Antriebszahnrad 5 um eine Drehachse 6 drehbar gelagert, in deren Zähne eine nicht dargestellte Zylinderschnecke eingreift, die von einem Elektromotor unidirektional drehbar antreibbar ist.

In einem radialen Abstand von der Drehachse 6 ist an dem Antriebszahnrad 5 ein zur Drehachse 6 parallel sich erstreckender Kurbelzapfen 10 hervorstehend angeordnet, der in eine Kulissenbahn 11 der Transportvorrichtung eingreift, die sich quer zur Erstreckung des Bewegungswegs der Transportvorrichtung 4 im Schacht 3 parallel zur Ebene der Trägerplatte 1 erstreckt.

Die Transportvorrichtung 4 weist einen Aufnahmeschlitz 14 auf, in den durch eine Einführöffnung 16 eine Chipkarte 15 bis zur Anlage an Anschlägen 17 der Transportvorrichtung 4 einführbar ist.

In der in den Figuren 4 bis 6 und 9 dargestellten Ausfahrposition der Transportvorrichtung 4 befindet sich der Kurbelzapfen 10 in einer der Einführöffnung 16 näheren Mittenposition zwischen den beiden seitlichen Enden der Kulissenbahn 11.

In der in den Figuren 7 bis 9 dargestellten Einzugsposition ist das Antriebszahnrad 5 um 180° gedreht, so dass sich dann der Kurbelzapfen 10 in einer der Einführöffnung 16 entfernten Mittenposition zwischen den beiden seitlichen Enden der Kulissenbahn 11 befindet.

Durch diese Drehung des Antriebszahnrades 5 um 180° wird durch Wandern des Kurbelzapfens 10 in der Kulissenbahn 11 die Transportvorrichtung 4 aus ihrer Ausfahrposition, in der die Chipkarte 15 in den Einführschlitz 16 bis zur Anlage an Anschlägen 17 der Transportvorrichtung 4 einführbar ist, in die Einzugsposition bewegt.

Dabei wird auch die Chipkarte 15 in die Einzugsposition bewegt, in der ein auf der Chipkarte 15 angeordneter Datenspeicher 18 mit nicht dargestellten feststehenden Kontakten kontaktiert, so dass die Daten des Datenspeichers 18 in eine ebenfalls nicht dargestellte Lese- und Speichereinheit des elektronischen Fahrtschreibers eingelesen werden können.

Bei weiterer Drehung des Antriebszahnrades 5 und Wandern des Kurbelzapfens 10 in der Kulissenbahnen 11, wird die Transportvorrichtung 4 wieder in ihre Ausfahrposition bewegt, so dass die Chipkarte 15 wieder entnommen werden kann.

Das Antriebszahnrad 5 besitzt mit gleichem radialem Abstand zur Drehachse 6 zwei durchgehend ausgebildete Positionsöffnungen 7 und 7', die sich diagonal einander gegenüberliegen.

An dem äußeren Randbereich der rechten Seitenführung 2 ist ein Lichtleiterbauteil 8 durch eine Klipsverbindung befestigt, die ausgehend von einem Lichtverteiler 9 einen ersten Lichtleiter 19 und einen zweiten Lichtleiter 20 aufweist.

Im Bereich des Lichtleiters 9 besitzt das Lichtleiterbauteil 8 eine Lichteinkoppelstelle 21, in die von einer auf der Leiterplatte 23 angeordneten Leuchtdiode 22 Licht in das Lichtleiterbauteil einkoppelbar ist.

Der Lichtverteiler 9 leitet einen Teil des Lichts in den ersten Lichtleiter 19 und den anderen Teil des Lichts in den zweiten Lichtleiter 20.

Der erste Lichtleiter 19 erstreckt sich auf der der Leiterplatte 23 abgewandten Seite in den Bereich des Antriebszahnrades 5 und besitzt in demselben radialen Abstand zur Drehachse 6, wie die Positionsöffnungen 7, 7' eine erste Lichtauskoppelstelle 24.

Dieser Lichtauskoppelstelle 24 axial zur Drehachse 6 gegenüberliegend ist auf der anderen Seite des Antriebszahnrades 5 ein mit der Trägerplatte 1 fest verbundener erster Lichtleitkanal 25 angeordnet, der zu einem auf der Leiterplatte 23 angeordneten ersten Phototransistor 26 führt.

Ist in der Ausfahrposition die Positionsöffnung 7 oder in der Einzugsposition die Positionsöffnung 7' in Überdeckung mit der ersten Lichtauskoppelstelle 24, kann Licht von der ersten Lichtauskoppelstelle 24 durch die Positionsöffnung 7 bzw. 7' und den ersten Lichtleitkanal 24 zum ersten Phototransistor 26 gelangen, so dass dieser ein entsprechendes Signal auslöst und einer nicht dargestellten Steuereinheit zuleitet.

Im seitlichen Bereich neben der Einführöffnung 16 ist ein Verriegelungselement 27 um eine zur Drehachse 6 parallele Schwenkachse 28 zwischen einer Verriegelungsposition (Figuren 7 bis 9) und einer Entriegelungsposition (Figuren 4 bis 6) schwenkbar gelagert.

Ein Verriegelungsarm 29 ist dabei aus der die Einführöffnung 16 freigebenden Entriegelungsstellung in die die Einführöffnung 16 teilweise verschließenden Verriegelungsstellung und zurück schwenkbar.

Das Verriegelungselement 27 ist auf eine nicht dargestellte Weise von dem Antriebszahnrad 5 antreibbar.

Das Verriegelungselement 27 weist eine radial hervorstehende Auslösefahne 30 auf.

Der zweite Lichtleiter 20 erstreckt sich entlang der rechten Seitenführung 2 in den Bereich des Verriegelungselements 27 und besitzt an seinem freien Ende eine zu einem auf der Leiterplatte 23 angeordneten zweiten Phototransistor 33 gerichtete Lichtauskoppelstelle 32.

Zwischen der zweiten Lichtauskoppelstelle 32 und dem zweiten Phototransistor 33 ist ein mit der Trägerplatte 1 fest verbundener zweiter Lichtleitkanal 34 angeordnet, wobei zwischen dem der zweiten Lichtauskoppelstelle 32 zugewandten Ende des zweiten Lichtleitkanals 34 und der zweiten Lichtauskoppelstelle 32 ein Spalt 31 belassen ist, in den die Auslösefahne 30 in der Verriegelungsposition des Verriegelungselements 27 hineinbewegt ist und die Lichtstrahlung von der zweiten Lichtauskoppelstelle 32 durch den zweiten Lichtleitkanal 34 zum zweiten Phototransistor 33 unterbricht.

Dieser Phototransistor 33 leitet ein entsprechendes Verriegelungssignal der Steuereinheit zu.

Um Streulicht zu vermeiden, ist der zweite Phototransistor 33 sowie die ihm zugewandte Mündung des zweiten Lichtleitkanals 34 in einer mit dem Träger 1 fest verbundenen geschlossenen Kammer 12 angeordnet.

Ebenfalls zur Streulichtvermeidung ist die Leuchtdiode 22 sowie die Lichteinkoppelstelle 21 des Lichtleiterbauteils 8 von einem mit dem Träger 1 fest verbundenen Lichtschacht 13 umschlossen.

Wird eine Chipkarte 15 in den Aufnahmeschlitz 14 bis zur Anlage an den Anschlägen 17 eingeführt, wird der Elektromotor gestartet und das Antriebszahnrad 5 drehbar angetrieben, bis die Positionsöffnung 7 die erste Lichtauskoppelstelle 24 erreicht hat.

Bis dahin wurde eine Lichtstrahlung von der ersten Auskoppelstelle 24 zum ersten Phototransistor 26 durch das eine Blende bildende Antriebszahnrad 5 unterbrochen.

Bei Überdeckung von Positionsöffnung 7 und erster Lichtauskoppelstelle 24 gelangt die Lichtstrahlung durch die Positionsöffnung 7 zum ersten Phototransistor 26, der ein entsprechendes Signal der Steuereinheit zuleitet.

Mit der Einfahrbewegung der Transportvorrichtung 4 wird auch das Verriegelungselement 27 aus seiner Entriegelungsstellung in seine Verriegelungsstellung und damit der Verriegelungsarm 29 vor die Einführöffnung 16 geschwenkt.

Dabei schwenkt auch die Auslösefahne 30 über die zweite Lichtauskoppelstelle 32, so dass kein Licht mehr zum zweiten Phototransistor 33 gelangen kann. Dieser löst das Verriegelungssignal aus und leitet es der Steuereinheit zu.

Durch das Vorhandensein des Signals des ersten Phototransistors 26 und des Verriegelungssignals erkennt die Steuereinheit, dass sich die Transportvorrichtung 4 in der Einzugsposition befindet und stoppt den Elektromotor exakt in dieser Position.

Wird der Elektromotor für eine Ausfahrbewegung gestartet, dreht das Antriebszahnrad 5 bis die Positionsöffnung 7' in Überdeckung mit der ersten Lichtauskoppelstelle 24 ist und der erste Phototransistor 26 Licht von der ersten Lichtauskoppelstelle 24 zugeleitet erhält sowie ein entsprechendes Signal an die Steuereinheit leitet, die dann die Ausfahrbewegung der Transportvorrichtung 4 stoppt.

Da die Steuereinheit jetzt kein Verriegelungssignal von dem zweiten Phototransistor 33 erhält, erkennt sie, dass die Transportvorrichtung 4 sich in der Ausfahrposition befindet.

## Patentansprüche

1. Karteneinzugsvorrichtung insbesondere für einen Fahrtschreiber eines Kraftfahrzeugs zum vollständigen Einzug einer Karte, insbesondere einer Chipkarte, mit einer Transportvorrichtung, die einen Aufnahmeschlitz mit einer Einführöffnung zur Aufnahme der Karte aufweist, wobei die Transportvorrichtung in einem Schacht geführt von einem durch einen Antrieb um eine Drehachse drehbar antreibbaren Antriebsteil auf einem Transportweg zwischen einer Ausfahrposition und einer Einzugsposition translatorisch bewegbar antreibbar ist, wobei das Erreichen der Ausfahrposition und der Einzugsposition durch eine Sensoreinrichtung erfassbar ist, wobei von der Sensoreinrichtung die Ausfahrposition und/oder die Einzugsposition des Antriebsteils erfassbar und ein entsprechendes Signal auslösbar ist, **dadurch gekennzeichnet, dass** das Antriebsteil in einer einzigen Drehrichtung drehbar antreibbar und das von der Sensoreinrichtung auslösbar Signal einer Steuereinheit zuleitbar ist.

2. Karteneinzugsvorrichtung nach Anspruch 1, **dadurch gekennzeichnet, dass** das Antriebsteil zwei um 180° versetzte Auslöseelemente aufweist, durch die in der Ausfahrposition und in der Einzugsposition des Antriebsteils ein entsprechendes Signal der Sensoreinrichtung auslösbar und der Steuereinheit zuleitbar ist.

3. Karteneinzugsvorrichtung nach einem der vorhergehenden Ansprüche, **dadurch gekennzeichnet, dass** von dem Antriebsteil ein Verriegelungselement (27) zwischen einer Verriegelungsposition und einer Entriegelungsposition bewegbar antreibbar ist, durch das in der Verriegelungsposition ein Verriegelungssignal eines Verriegelungssensors auslösbar und der Steuereinheit zuleitbar ist, wobei durch das Verriegelungselement (27) in der Verriegelungsposition die Einführöffnung (16) der in der Einzugsposition befindlichen Transportvorrichtung (4) ganz oder teilweise verschließbar und in der Entriegelungsposition die Einführöffnung (16) der in der Ausfahrposition befindlichen Transportvorrichtung (4) freigebbar ist.

4. Karteneinzugsvorrichtung nach Anspruch 3, **dadurch gekennzeichnet, dass** das Verriegelungselement (27) eine Auslösefahne (30) aufweist, durch die das Verriegelungssignal des Verriegelungssensors auslösbar ist.

5. Karteneinzugsvorrichtung nach einem der Ansprüche 3 und 4, **dadurch gekennzeichnet, dass** das Verriegelungselement (27) ein um eine Schwenkachse (28) schwenkbares Verriegelungselement (27) ist.

6. Karteneinzugsvorrichtung nach einem der vorhergehenden Ansprüche, **dadurch gekennzeichnet, dass** die Sensoreinrichtung und/oder der verriegelungssensor eine berührungslos auslösbare Sensoreinrichtung und/oder ein berührungslos auslösbarer Verriegelungssensor ist.

7. Karteneinzugsvorrichtung nach Anspruch 6, **dadurch gekennzeichnet, dass** das Antriebsteil eine kreisscheibenartige Blende mit einer in einem bestimmten radialen Abstand zur Drehachse (6) der Blende durchgehend ausgebildeten Positionsöffnung (7) ist, mit einem mit demselben radialen Abstand zur Drehachse (6) angeordneten, zur Blende gerichteten Lichtsender auf der einen Seite der Blende und einem dem Lichtsender auf der anderen Seite der Blende gegenüberliegenden Lichtempfänger, wobei bei Überdeckung des Lichtsenders durch die Positionsöffnung (7) von dem Lichtempfänger das Signal auslösbar und der Steuereinheit zuleitbar ist.

8. Karteneinzugsvorrichtung nach Anspruch 7, **dadurch gekennzeichnet, dass** die kreisscheibenartige Blende eine zweite durchgehend ausgebildete Positionsöffnung (7') in einem weiteren bestimmten radialen Abstand zur Drehachse (6) der Blende aufweist, mit einem mit demselben weiteren radialen Abstand zur Drehachse (6) angeordneten, zur Blende gerichteten zweiten Lichtsender auf der einen Seite der Blende und einem dem zweiten Lichtsender auf der anderen Seite der Blende gegenüberliegenden zweiten Lichtempfänger, wobei bei Überdeckung des zweiten Lichtsenders durch die zweite Positionsöffnung (7') von dem zweiten Lichtempfänger ein weiteres Signal auslösbar und der Steuereinheit zuleitbar ist.

9. Karteneinaugsvorrichtung nach den Ansprüchen 7 und 8, **dadurch gekenntzeichnet**, dass die zweite Positionsöffnung (7') um einen Winkel, insbesondere um 180° versetzt in demselben radialen Abstand zur Drehachse (6) der Blende wie die erste Positionsöffnung (7) angeordnet ist und mit einem einzigen mit demselben radialen Abstand zur Drehachse (6) angeordneten, zur Blende gerichteten Lichtsender auf der einen Seite der Blende und einem einzigen dem Lichtsender auf der anderen Seite der Blende gegenüberliegenden Lichtempfänger, wobei bei Überdeckung des Lichtsenders durch eine der beiden Positionsöffnungen (7, 7') von dem Lichtempfänger ein Signal auslösbare und der Steuereinheit zuleitbar ist.

10. Karteneinzugsvorrichtung nach einem der Ansprüche 6 bis 9, **dadurch gekennzeichnet, dass** ein zweiter Lichtsender und ein zweiter Lichtempfänger in einem Abstand voneinander angeordnet sind und die Auslösefahne (30) in der Verriegelungsposition des Verriegelungselements (27) eine Lichtstrahlung vom Lichtsender zum Lichtempfänger unterbrechend in den Abstand hineinbewegt ist.

11. Karteneinzugsvorrichtung nach einem der Ansprüche 7 bis 9, **dadurch gekennzeichnet, dass** der erste Lichtsender und/oder der zweite Lichtsender eine erste und/oder eine zweite Lichtauskoppelstelle (24, 32) eines ersten und/oder eines zweiten Lichtleiters (19, 20) ist, der in einem Abstand zur ersten und/oder zweiten Lichtauskoppelstelle (24, 32) eine erste und/oder zweite Lichteinkoppelstelle (21) aufweist, an der durch eine Lichtquelle Licht in den ersten und/oder zweiten Lichtleiter (19, 20) einkoppelbar ist.

12. Karteneinzugsvorrichtung nach Anspruch 10, **dadurch gekennzeichnet, dass** zwischen der ersten und/oder der zweiten Lichtauskoppelstelle (24, 32) und dem ersten und/oder zweiten Lichtempfänger ein feststehender erster und/oder zweiter Lichtleitkanal (25, 34) angeordnet ist.

13. Karteneinzugsvorrichtung nach einem der Ansprüche 10 und 11, **dadurch gekenntzeichnet**, dass die erste und/oder zweite Lichtquelle von einem feststehenden ersten und/oder zweiten Lichtschacht (13) umschlossen ist, der zur ersten und/oder zweiten Lichteinkoppelstelle (21) des ersten und/oder zweiten Lichtleiters (19, 20) führt.

14. Karteneinzugsvorrichtung nach einem der Ansprüche 10 bis 12, **dadurch gekennzeichnet, dass** ein Lichtleiterbauteil (8) mehrere Lichtleiter (19, 20) aufweist, die von einem Lichtverteiler (9) ausgehen, von dem an der Lichteinlcoppelstelle (21) eingekoppeltes Licht in die mehreren Lichtleiter (19, 20) geleitet und Lichtauskoppelstellen (24, 32) der Lichtleiter (19, 20) zuleitbar ist.

15. Karteneinzugsvorrichtung nach einem der Ansprüche 10 bis 13, **dadurch gekennzeichnet, dass** die erste und/oder zweite Lichtquelle eine Leuchtdiode (LED) (22) ist.

16. Karteneinzugsvorrichtung nach einem der Ansprüche 10 bis 14, **dadurch gekennzeichnet, dass** der erste und/oder zweite Lichtempfänger ein Phototransistor (26, 33) ist.

17. Karteneinzugsvorrichtung nach einem der vorhergehenden Ansprüche, **dadurch gekennzeichnet, dass** das Antriebsteil ein Koppelelement aufweist, das in einem Abstand zur Drehachse (6) angeordnet ist und entlang einer sich im Wesentlichen quer zur Erstreckung des Bewegungswegs der Transportvorrichtung (4) erstreckenden Führungsbahn an der Transportvorrichtung (4) bewegbar geführt ist, wobei sich das Koppelelement in der Ausfahrposition und in der Einzugsposition in einer Mittenposition zwischen den beiden Enden der Führungsbahn befindet.

18. Karteneinzugsvorrichtung nach Anspruch 15, **dadurch gekennzeichnet, dass** sich die Führungsbahn gerade erstreckt.

19. Karteneinzugsvorrichtung nach einem der vorhergehenden Ansprüche, **dadurch gekennzeichnet, dass** das Koppelelement ein Kulissenstein und die Führungsbahn eine Kulissenbahn (11) ist, in die der insbesondere als Kurbelzapfen (10) runden Querschnitts ausgebildeter Kulissenstein bewegbar eingreift.

20. Karteneinzugsvorrichtung nach einem der vorhergehenden Ansprüche, **dadurch gekennzeichnet, dass** das Antriebsteil ein Antriebszahnrad (5) ist.

21. Karteneinzugsvorrichtung nach Anspruch 19, **dadurch gekennzeichnet, dass** in das Antriebszahnrad (5) eine Zylinderschnecke eingreift, die von einem Drehantrieb, insbesondere von einem Elektromotor unidirektional drehbar antreibbar ist.

## Claims

1. Card entering device particularly for a trip recorder of a motor vehicle for the complete entering of a card, particularly a chip card, comprising a transport device which has a receiving slot with an insertion opening for receiving the card, wherein the transport device, guided in a well, can be driven in a translatorially moveable manner by a driving part, rotatably drivable by a drive about an axis of rotation, on a transport path between an extended position and an entering position, wherein the reaching of the extended position and of the entering position can be detected by a sensor device, wherein the sensor device can detect the extended position and/or the entering position of the driving part and can trigger a corresponding signal, **characterized in that** the driving part can be driven rotatably in a single direction of rotation and the signal which can be triggered by the sensor device can be supplied to a control unit.

2. Card entering device according to Claim 1, **characterized in that** the driving part has two triggering elements offset by 180°, by means of which a corresponding signal can be triggered in the extended position and in the entering position of the driving part and can be supplied to the control unit.

3. Card entering device according to one of the preceding claims, **characterized in that** the driving part can movably drive a latching element (27) between a latching position and an unlatching position, by means of which a latching signal of a latching sensor can be triggered in the latching position and supplied to the control unit, wherein the insertion opening (16) of the transport device (4) located in the entering position can be wholly or partially closed by the latching element (27) in the latching position and the insertion opening (16) of the transport device (4) located in the extended position can be released in the unlatching position.

4. Card entering device according to Claim 3, **characterized in that** the latching element (27) has a triggering tab (30) by means of which the latching signal of the latching sensor can be triggered.

5. Card entering device according to one of Claims 3 and 4, **characterized in that** the latching element (27) is a latching element (27) which can be swivelled about a swivelling axis (28).

6. Card entering device according to one of the preceding claims, **characterized in that** the sensor device and/or the latching sensor is a contactlessly triggerable sensor device and/or a contactlessly triggerable latching sensor.

7. Card entering device according to Claim 6, **characterized in that** the driving part is a circular-disc-like diaphragm with a position opening (7) constructed continuously at a certain radial distance from the axis of rotation (6) of the diaphragm, with a light transmitter, directed towards the diaphragm, arranged at the same radial distance from the axis of rotation (6), on the one side of the diaphragm and a light receiver arranged opposite the light transmitter on the other side of the diaphragm, wherein, when the light transmitter is overlapped by the position opening (7), the signal can be triggered by the light receiver and supplied to the control unit.

8. Card entering device according to Claim 7, **characterized in that** the circular-disc-like diaphragm has a second continuously constructed position opening (7') at a further certain radial distance from the axis of rotation (6) of the diaphragm, with a second light transmitter, directed towards the diaphragm, arranged at the same further radial distance from the axis of rotation (6), on the one side of the diaphragm and a second light receiver opposite the second light transmitter on the other side of the diaphragm, wherein, when the second position opening (7') overlaps the second light transmitter, a further signal can be triggered by the second light receiver and supplied to the control unit.

9. Card entering device according to Claims 7 and 8, **characterized in that** the second position opening (7') is arranged offset by an angle, particularly by 180°, at the same radial distance from the axis of rotation (6) of the diaphragm as the first position opening (7) and with a single light transmitter, directed towards the diaphragm, arranged at the same radial distance from the axis of rotation (6), on the one side of the diaphragm and a single light receiver opposite the light transmitter on the other side of the diaphragm, wherein, when the light transmitter is overlapped by one of the two position openings (7, 7'), a signal can be triggered by the light receiver and supplied to the control unit.

10. Card entering device according to one of Claims 6 to 9, **characterized in that** a second light transmitter and a second light receiver are arranged at a distance from one another and the triggering tab (30) is moved into the space in the latching position of the latching element (27), interrupting a light radiation from the light transmitter to the light receiver.

11. Card entering device according to one of Claims 7 to 9, **characterized in that** the first light transmitter and/or the second light transmitter is a first and/or a second light output coupling point (24, 32) of a first and/or of a second optical guide (19, 20) which has at a distance from the first and/or the second light output coupling point (24, 32) a first and/or a second light input coupling point (21) at which light can be coupled into the first and/or second optical guide (19, 20) by a light source.

12. Card entering device according to Claim 10, **characterized in that** a stationary first and/or second light conducting channel (25, 34) is arranged between the first and/or the second light output coupling point (24, 32) and the first and/or second light receiver.

13. Card entering device according to one of Claims 10 and 11, **characterized in that** the first and/or second light source is enclosed by a stationary first and/or second light well (13) which leads to the first and/or second light input coupling point (21) of the first and/or second optical guide (19, 20).

14. Card entering device according to one of Claims 10 to 12, **characterized in that** an optical guide component (8) has a number of optical guides (19, 20) which come from a light distributor (9) from which light coupled in at the light input coupling point (21) is conducted into the number of optical guides (19, 20) and can be supplied to light output coupling points (24, 32) of the optical guides (19, 20).

15. Card entering device according to one of Claims 10 to 13, **characterized in that** the first and/or second light source is a light-emitting diode (LED) (22).

16. Card entering device according to one of Claims 10 to 14, **characterized in that** the first and/or second light receiver is a phototransistor (26, 33).

17. Card entering device according to one of the preceding claims, **characterized in that** the driving part has a coupling element which is arranged at a distance from the axis of rotation (6) and is guided movably at the transport device (4) along a guide track extending essentially transversely to the extent of the path of movement of the transport device (4), wherein the coupling element is located in a centre position between the two ends of the guide track in the extended position and in the entering position.

18. Card entering device according to Claim 15, **characterized in that** the guide track extends in a straight line.

19. Card entering device according to one of the preceding claims, **characterized in that** the coupling element is a sliding block and the guide track is a sliding-block track (11) which is movably engaged by the sliding block constructed in particular as a crank pin (10) of round cross section.

20. Card entering device according to one of the preceding claims, **characterized in that** the driving part is a toothed driving wheel (5).

21. Card entering device according to Claim 19, **characterized in that** the toothed driving wheel (5) is engaged by a cylindrical worm which can be rotatably driven unidirectionally by a rotating drive, particularly by an electric motor.

## Revendications

1. Dispositif d'introduction de carte, notamment pour un contrôlographe d'un véhicule automobile pour l'introduction complète d'une carte, notamment d'une carte à puce, comprenant un dispositif de transport, qui a une fente de réception ayant une ouverture d'introduction pour la réception de la carte, le dispositif de transport pouvant être entraîné en étant mobile en translation, en étant guidé dans un puits par une partie d'entraînement pouvant être entraînée en rotation autour d'un axe de rotation par un entraînement sur un trajet de transport entre une position sortie et une position rentrée, le fait que la position sortie et que la position rentrée est atteinte pouvant être détecté par un dispositif à capteur, la position sortie et/ou la position rentrée de la partie d'entraînement pouvant être détectée par le dispositif à capteur et un signal correspondant pouvant être déclenché, **caractérisé en ce que** la partie d'entraînement peut être entraînée en rotation dans un sens de rotation unique et le signal qui peut être déclenché par le dispositif à capteur peut être envoyé à une unité de commande.

2. Dispositif d'introduction de carte suivant la revendication 1, **caractérisé en ce que** la partie d'entraînement comporte deux éléments de déclenchement, qui sont décalés à 180° et par lesquels, en la position sortie et en la position rentrée de la partie d'entraînement, un signal correspondant du dispositif à capteur peut être déclenché et peut être envoyé à l'unité de commande.

3. Dispositif d'introduction de carte suivant l'une des revendications précédentes, **caractérisé en ce que**, par le dispositif d'entraînement, un élément (27) de verrouillage peut être mis en mouvement entre une position de verrouillage et une position de déverrouillage, élément par lequel dans la position de verrouillage, un signal de verrouillage d'un capteur de verrouillage peut être déclenché et être envoyé à l'unité de commande, l'ouverture (16) d'introduction du dispositif (4) de transport, se trouvant dans la position rentrée, pouvant être fermée en tout ou partie par l'élément (27) de verrouillage dans la position de verrouillage et, dans la position de déverrouillage, l'ouverture (16) d'introduction du dispositif (4) de transport, se trouvant dans la position sortie, pouvant être dégagée.

4. Dispositif d'introduction de carte suivant la revendication 3, **caractérisé en ce que** Isolément (27) de verrouillage comporte une oreille (30) de déclenchement, par laquelle le signal de verrouillage du capteur de verrouillage peut être déclenché.

5. Dispositif d'introduction de carte suivant l'une des revendications 3 et 4, **caractérisé en ce que** l'élément (27) de verrouillage est un élément (27) de verrouillage pouvant pivoter autour d'un axe (28) de pivotement.

6. Dispositif d'introduction de carte suivant l'une des revendications précédentes, **caractérisé en ce que** le dispositif à capteur et/ou le capteur de verrouillage est un dispositif à capteur pouvant être déclenché sans contact et/ou un capteur de verrouillage pouvant être déclenché sans contact.

7. Dispositif d'introduction de carte suivant la revendication 6, **caractérisé en ce que** la partie d'entraînement est un écran de type en disque circulaire, ayant une ouverture (7) de position qui est traversante à une certaine distance radiale de l'axe (6) de rotation de l'écran, comprenant un émetteur de lumière, qui est disposé à la même distance radiale par rapport à l'axe (6) de rotation, qui est dirigé vers l'écran et qui est disposé d'un côté de l'écran et un récepteur de lumière qui est opposé à l'émetteur de lumière de l'autre côté de l'écran, dans lequel, lorsque l'émetteur de lumière est recouvert en passant par l'ouverture (7) de position par le récepteur de lumière, le signal peut être déclenché et être envoyé à l'unité de commande.

8. Dispositif d'introduction de carte suivant la revendication 7, **caractérisé en ce que** l'écran de type en disque circulaire a une deuxième ouverture (7') de position traversante à une autre distance radiale déterminée par rapport à l'axe (6) de rotation de l'écran, comprenant un deuxième émetteur de lumière, qui est disposé à la même autre distance radiale par rapport à l'axe (6) de rotation, qui est dirigé vers l'écran et qui se trouve d'un côté de l'écran et un deuxième récepteur de lumière opposé au deuxième émetteur de lumière de l'autre côté de l'écran, dans lequel, lorsque le deuxième émetteur de lumière est recouvert en passant par la deuxième ouverture (7') de position par le deuxième récepteur de lumière, un autre signal peut être déclenché et être envoyé à l'unité de commande.

9. Dispositif d'introduction de carte suivant les revendications 7 et 8, **caractérisé en ce que** la deuxième ouverture (7') de position est décalée d'un angle, notamment de 180° à la même distance radiale par rapport à l'axe (6) de rotation de l'écran, que la première ouverture (7) de position et comprenant un émetteur de lumière unique, qui est disposé à la même distance radiale par rapport à l'axe (6) de rotation, qui est dirigé vers l'écran et qui est d'un côté de l'écran et un récepteur de lumière unique opposé à l'émetteur de lumière de l'autre côté de l'écran, dans lequel, lorsque l'émetteur de lumière est recouvert en passant par l'une des deux ouvertures (7, 7') de position par le récepteur de lumière, un signal peut être déclenché et être envoyé à l'unité de commande.

10. Dispositif d'introduction de carte suivant l'une des revendications 6 à 9, **caractérisé en ce qu'**un deuxième émetteur de lumière et un deuxième récepteur de lumière sont disposés à distance l'un de l'autre et l'oreille (30) de déclenchement et, dans la position de verrouillage de l'élément (27) de verrouillage, l'oreille (30) de déclenchement est déplacée vers l'intérieur dans la distance, en interrompant un faisceau lumineux allant de l'émetteur de lumière au récepteur de lumière.

11. Dispositif d'introduction de carte suivant l'une des revendications 7 à 9, **caractérisé en ce que** le premier émetteur de lumière et/ou le deuxième émetteur de lumière est un premier et/ou un deuxième point (24, 32) de sortie de la lumière d'une première et/ou d'une deuxième fibre (19, 20) optique, qui comporte à distance du premier et/ou du deuxième point (24, 32) de sortie de la lumière, un premier et/ou un deuxième point (21) d'entrée de la lumière où, par une source lumière, de la lumière peut être injectée dans la première et/ou la deuxième fibre (19, 20) optique.

12. Dispositif d'introduction de carte suivant la revendication 10, **caractérisé en ce qu'**un premier et/ou un deuxième canal (25, 34) fixe de fibre optique est disposé entre le premier et/ou le deuxième point (24, 32) de sortie de la lumière et le premier et/ou le deuxième récepteur de lumière.

13. Dispositif d'introduction de carte suivant l'une des revendications 10 et 11, **caractérisé en ce que** la première et/ou la deuxième source de lumière est entourée d'un premier et/ou deuxième puits (13) fixe de lumière, qui mène au premier et/ou au deuxième point (21) d'entrée de la lumière de la première et/ou deuxième fibre (19, 20) optique.

14. Dispositif d'introduction de carte suivant l'une des revendications 10 à 12, **caractérisé en ce qu'**un composant (18) de fibre optique comporte plusieurs fibres (19, 20) optiques qui partent d'un répartiteur (9) de lumière, par lequel de la lumière injectée au point (21) d'entrée de la lumière est envoyée dans les plusieurs fibres (19, 20) optiques et peut être envoyée au point (24, 32) de sortie de la lumière des fibres (19, 20) optiques.

15. Dispositif d'introduction de carte suivant l'une des revendications 10 à 13, **caractérisé en ce que** la première et/ou la deuxième source lumineuse est une diode (22) lumineuse électroluminescente (DEL).

16. Dispositif d'introduction de carte suivant l'une des revendications 10 à 14, **caractérisé en ce que** le premier et/ou le deuxième récepteur de lumière est un phototransistor (26, 33).

17. Dispositif d'introduction de carte suivant l'une des revendications précédentes, **caractérisé en ce que** la partie d'entraînement comporte un élément d'accouplement, qui est disposé à distance de l'axe (6) de rotation et qui est guidé en étant mobile sur le dispositif (4) de transport le long d'une voie de guidage s'étendant sensiblement transversalement à l'étendue du trajet de déplacement du dispositif (4) de transport, l'élément d'accouplement se trouvant dans la position sortie et dans la position rentrée en une position médiane entre les deux extrémités de la voie de guidage.

18. Dispositif d' introduction de carte suivant la revendication 15, **caractérisé en ce que** la voie de guidage est rectiligne.

19. Dispositif d'introduction de carte suivant l'une des revendications précédentes, **caractérisé en ce que** l'élément d'accouplement est un coulisseau et la voie de guidage est une coulisse (11), dans laquelle le coulisseau, constitué notamment sous la forme d'un tourillon (10) de section transversale circulaire, pénètre en étant mobile.

20. Dispositif d'introduction de carte suivant l'une des revendications précédentes, **caractérisé en ce que** la partie d'entraînement est une roue (5) dentée d'entraînement.

21. Dispositif d'introduction de carte suivant la revendication 19, **caractérisé en ce que** dans la roue (5) dentée d'entraînement pénètre une vis cylindrique, qui peut être entraînée en rotation de manière unidirectionnelle par un entraînement en rotation, notamment par un moteur électrique.
